# EUROPEAN PATENT APPLICATION

(11) **EP 0 994 013 A1**
(43) Date of publication of application: **19.04.2000**
(21) Application number: 99912094.2
(22) Date of filing: 01.04.1999
(51) Int. Cl.: B62D 55/28

(54) **DETACHABLE PAD**

(30) Priority: 01.04.1998 JP 10692298
(71) Applicant: Fukuyama Gomu Kogyo Kabushiki Kaisha, Fukuyama-shi, Hiroshima-ken 720-0802 (JP)
(72) Inventor: KATOH, Yusaku, Fukuyama-shi, Hiroshima-ken 720-0092 (JP); ODA, Satoru, Fukuyama-shi, Hiroshima-ken 720-0201 (JP); OZAKI, Hirotaka, Kasaoka-shi, Okayama-ken 714-0032 (JP)
(74) Representative: Blumbach, Kramer & Partner GbR
(86) International application number: JP9901724
(87) International publication number: WO9951483

(57) **Abstract**

An elastic body pad which allows a steel crawler to be used conveniently in both cities and rough terrain, can be easily mounted to and dismounted from a shoe plate, and is excellent in durability, wherein a pad main body comprises a core metal and an elastic body stuck on the ground-contact side of the core metal, a hook part engaged with a shoe plate end part is provided at one end part of the core metal, a fixing member is provided at the other end of the core metal in the position in the elastic body corresponding to a shoe plate mounting hole, a pin engaged with a shoe plate mounting hole on the hook part side is provided at a position corresponding to the shoe plate mounting hole on the hook part side, and bolts and nuts are used as the fixing members buried in the elastic body.

## Description

### Technical Field

The present invention relates to a pad to be attached removably to a shoe plate of a metal crawler provided on an endless crawler such as a mobile construction machine or a vehicle for civil engineering works.

### Background of the Prior Art

Iron crawlers have been usually provided to mobile construction machines which mainly engage in work on the unleveled ground. However in recent years, construction machines have been frequently used on paved road surfaces in urban areas, thereby damaging the paved road surfaces by the iron crawlers.

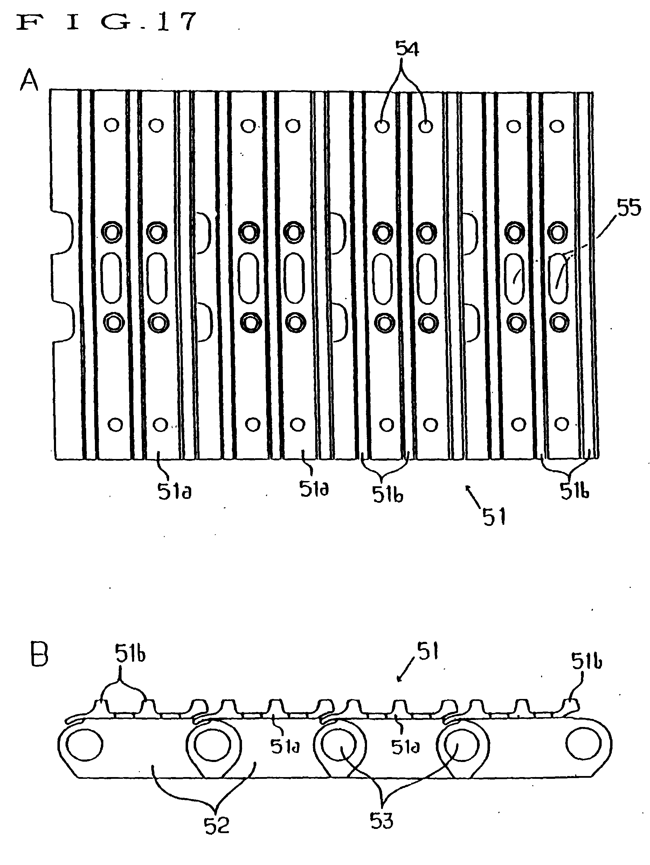

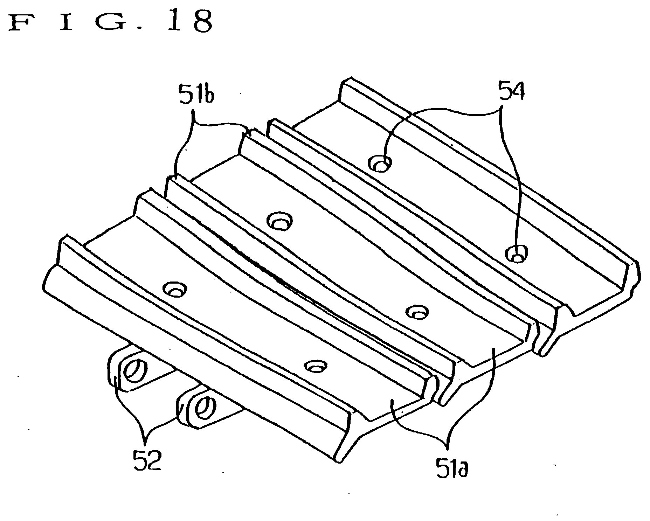

Figs. 17A, 17B, and 18 illustrate an example of a conventional iron crawler: Fig. 17A is a plan view, Fig. 17B is a side view in the widthwise direction of the conventional iron crawler, and Fig. 18 is a perspective view of a different conventional iron crawler. In these figures, 51 is a crawler shoe, 51a is a shoe plate, 51b is a grouser, 52 is a truck link, 53 is a link pin, 54 is a mounting hole, and 55 is a hole for discharging mud.

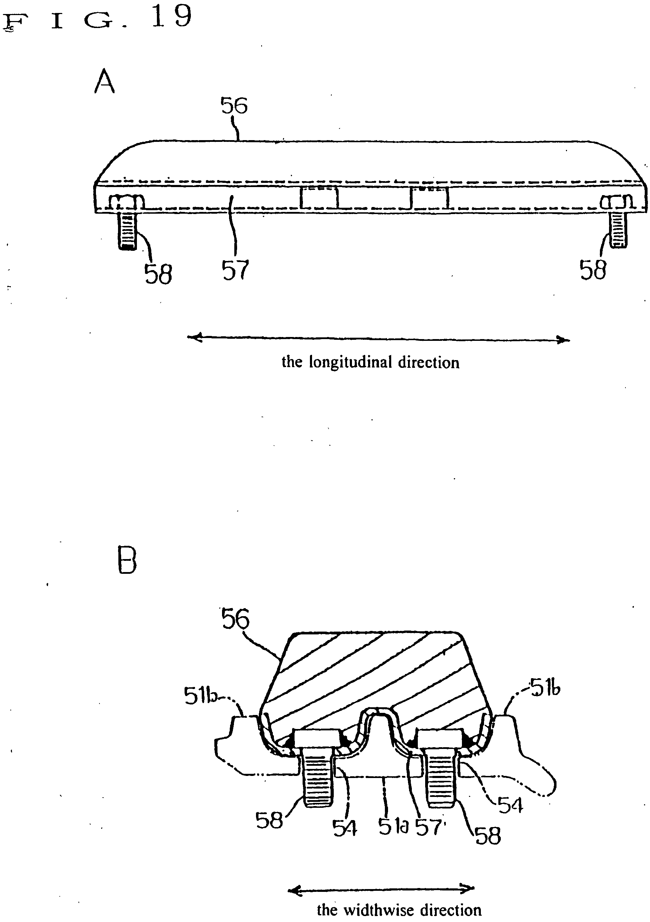

Many types of pads to be detachably fixed to the ground side of the shoe plate 51 of an iron crawler are proposed to protect the road surfaces. For example, Figs. 19A and 19B show a pad disclosed in a laid-open Japanese utility model publication No. 78684 of 1993. In this pad, bolts 58 are protuberantly provided on a core bar 57 of a pad body 56 at positions corresponding to mounting holes 54 provided around longitudinal ends of the shoe plate 51a of the iron crawler. The bolts 58 are inserted into the mounting holes 54, and fastened with (not-illustrated) nuts from the inside of the shoe plate 51 (from the non-ground side). Here, Fig. 19A is a side view in the longitudinal direction, and Fig. 19B is a sectional view in the widthwise direction.

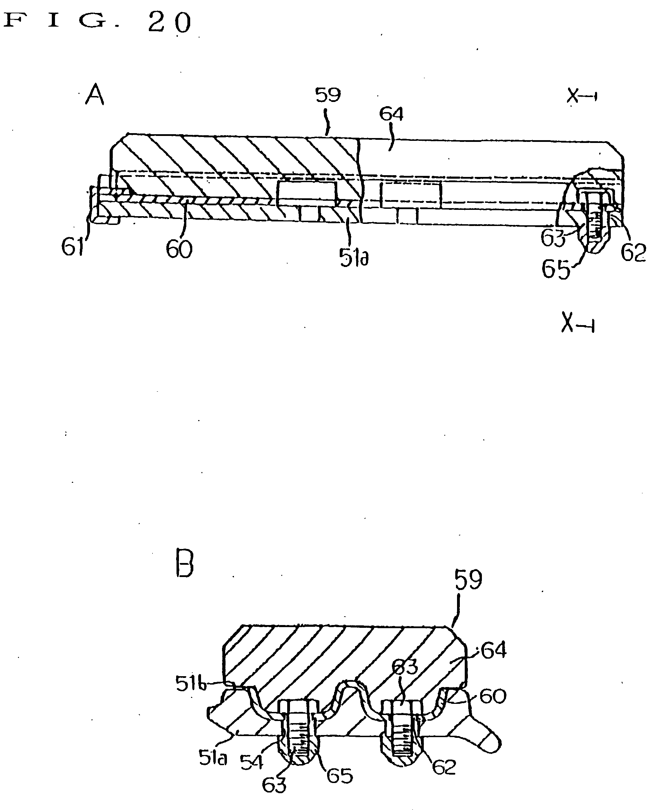

Since the above pad is fixed to the shoe plate 51 basically with four bolts, it takes time to fasten the bolts, which causes a mounting problem. Besides, in order to fasten the bolts inside a construction machine, a workman is required to get into under a vehicle body of the construction machine, which makes a fastening procedure difficult as well as causes a safety problem. In order to solve these problems, a laid-open Japanese patent publication No. 119163 of 1996 discloses a pad which is attached to the shoe plate 51 more easily than in the above pad. In this pad as shown in Figs. 20A and 20B, one end of a core bar 60 of a pad body 59 is provided with a hook 61 which is engaged with the end of the shoe plate, whereas the other end is provided with a bolt bole 62 corresponding to the mounting hole 54 of the shoe plate 51. A mounting bolt 63 is inserted into the bolt hole 62 from an elastic body side of the rubber pad body 59, and the pad is fixed to the shoe plate 51 by means of the hook 61 and the mounting bolt 63, thereby reducing the number of the bolts by half without any fastening work of the bolts inside the construction machine. Accordingly, fastening performance and safety of the pad are improved. Here, Fig. 20A is a side view in the longitudinal direction, and Fig. 20B is a sectional view taken along the line X-X in Fig. 20A. The numeral 64 indicates an elastic body, and 65 a nut.

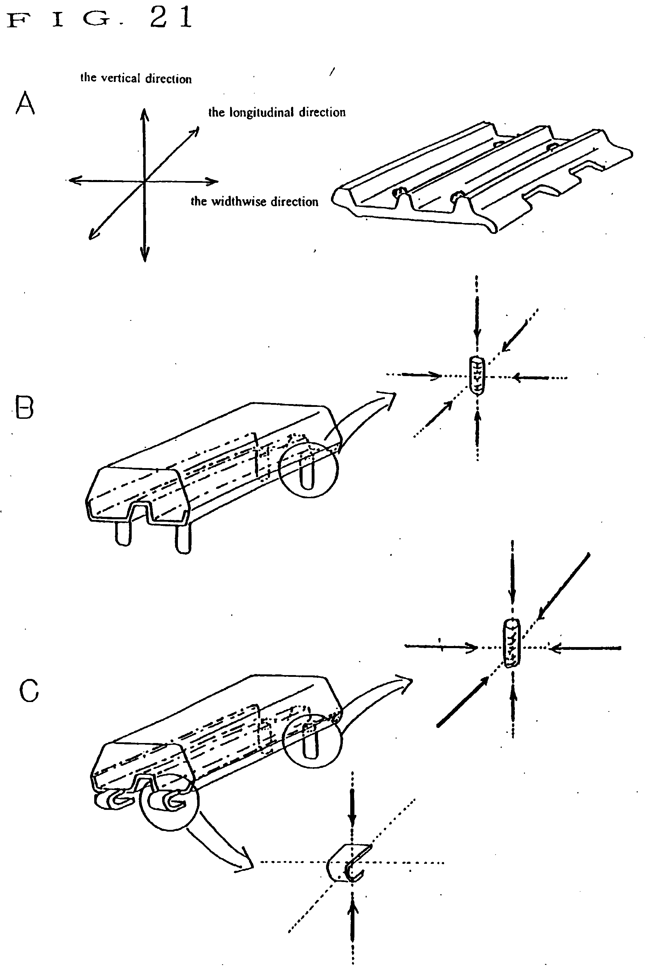

When the conventional pad fixed by means of four bolts receives horizontal (longitudinal and widthwise) loading, it is supported by the four bolts. However, when the pad shown in Fig. 20 receives the same loading, it is supported by only two bolts, thereby damaging and breaking the bolts easily. As shown in Fig. 21A, the pad receives three directional loading, namely vertical, longitudinal, and widthwise directions, if roughly divided. When the vertical loading is given, the pad in Fig. 21B is supported by four sets of bolts and nuts, whereas the pad in Fig. 21C is supported by two sets of bolts and nuts as well as two hooks. Therefore, in both the pads, one set of bolt and nut receives the same amount of loading. However, when the longitudinal or widthwise loading is given, the pad in Fig. 21B is supported by four sets of bolts and nuts, whereas the pad in Fig. 21C is supported by only two sets of bolts and nuts, because the hooks can not receive the horizontal loading. Accordingly, the bolts and nuts of the pad in Fig. 21C receive much more loading than those of the pad in Fig. 21B.

The present invention has been made in view of the above problem. The objects thereof are to apply an iron crawler both to urban sites and the unleveled ground, and therefore to provide a rubber pad which can be readily attached to or detached from a shoe plate and is excellent in durability as well.

### Disclosure of the Invention

To achieve the above objects, the present invention is characterized, by a detachable rubber pad to be fixed to the ground side of a shoe plate which has mounting holes near both ends of its longitudinal direction, wherein a pad body comprises a core bar and an elastic body fixed to the ground side of the core bar, wherein a hook is provided to one end of the core bar to engage with an end of the shoe plate, wherein on the other end of the core bar fixing members are embedded inside the elastic body at sites corresponding to the mounting holes of the shoe plate, and wherein pins are provided to sites corresponding to the mounting holes of the shoe plate on the hook side to engage with them.

In the present invention, the hook is provided to one end of the core bar in its longitudinal direction, so that the pad is engaged with the shoe plate of the iron crawler, whereas the fixing members are provided to the other end of the core bar at sites corresponding to the mounting holes of the shoe plate. Besides, the pins are provided at sites corresponding to the mounting holes of the shoe plate to engage with them, and the elastic body is fixed at least to the ground side of the core bar.

Though it is preferable that a shape of the core bar in the pad is in accordance with that of the shoe plate, it may be of pipe or plate as well. The fixing members generally comprise a bolt and a nut. Either bolts or nuts can be embedded in the elastic body on the ground side of the pud. Besides, it is preferable that embedded bolts or nuts are welded and fixed to the core bar of the pud body. They may be fixed thereto with an adhesive agent or a rivet. Moreover, it is preferable that the height of the embedded bolts or nuts is the same as or lower than that of a grouser of the shoe plate.

Furthermore, it is preferable that the pins are welded and fixed to the core bar to be protrude out of the core bar, as the bolts (or nuts) of the fixing members. The pins can be integrally formed with the core bar. Besides, the hook and the pins can be integrated and fixed to the core bar. Moreover, the pins, the hook, and the core bar can be integrated.

The elastic body is made of one material of natural rubber or synthetic rubber such as SBA, BR, or urethan, as well as of a blend of natural rubber, synthetic rubber, and high polymer resin. They are suitably blended according to usage conditions, costs, etc. of the pad.

### Brief Description of the Drawings

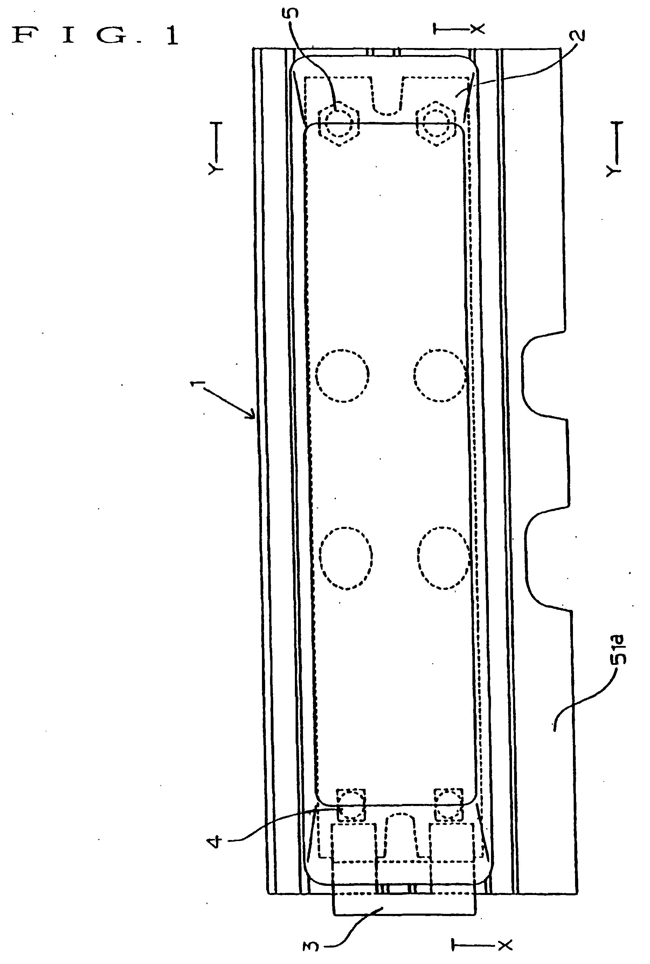

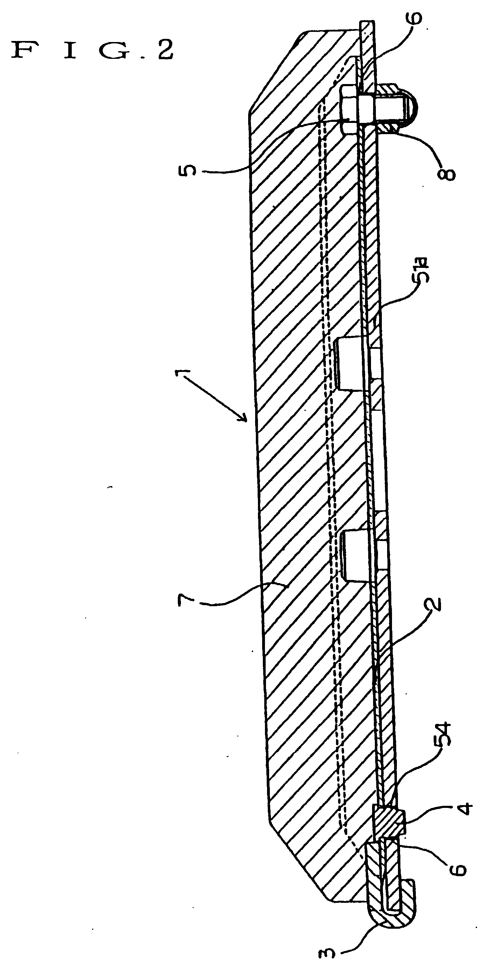

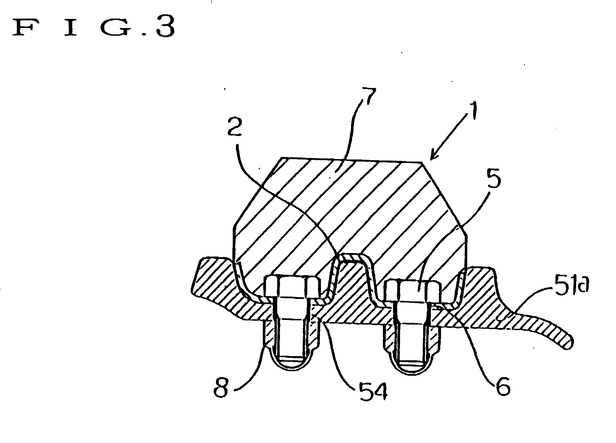

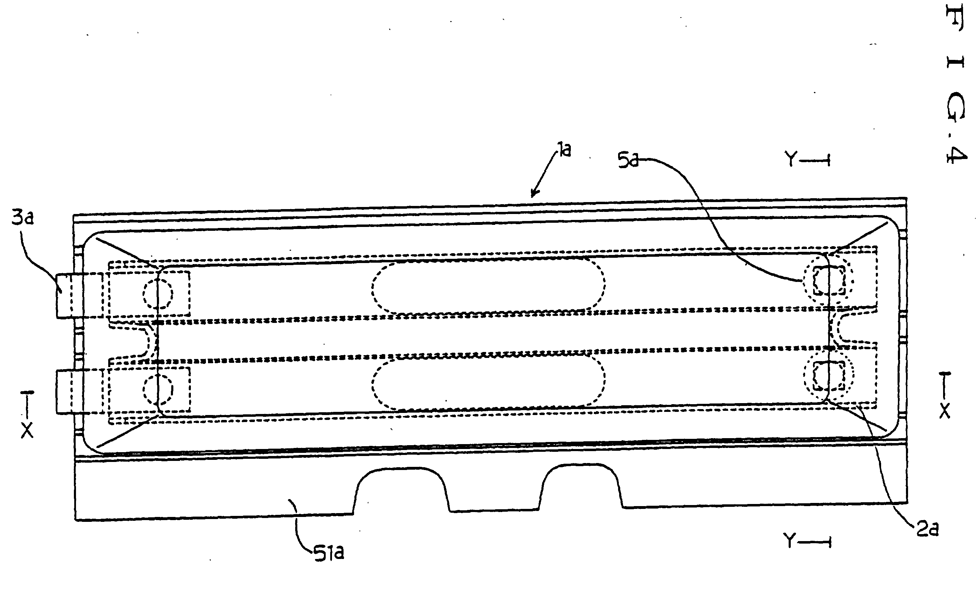

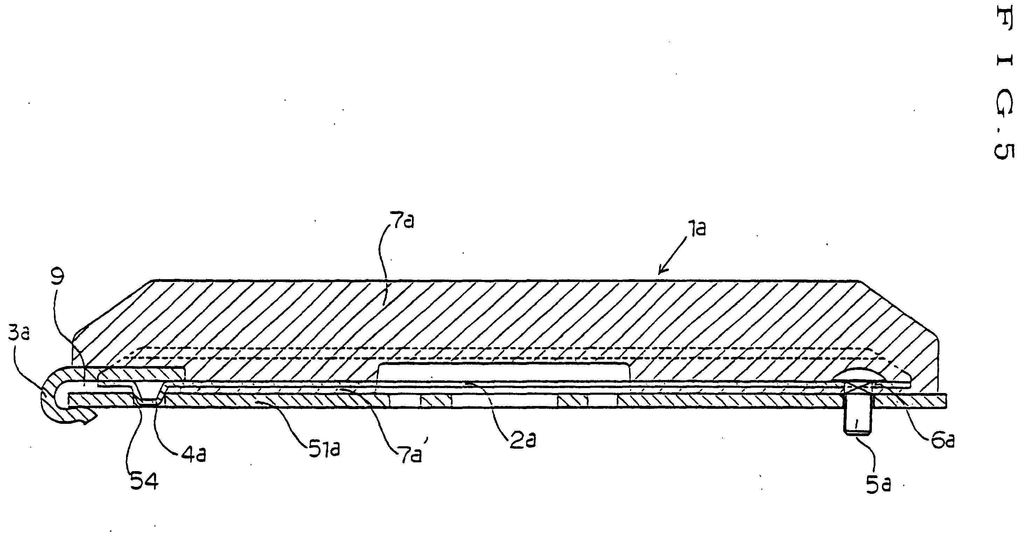

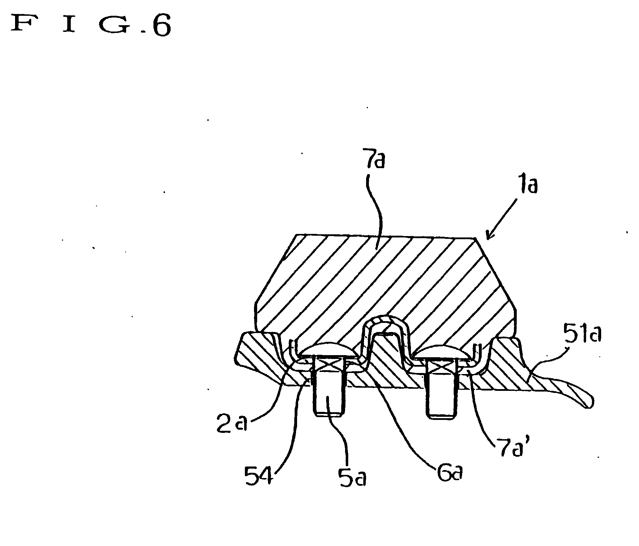

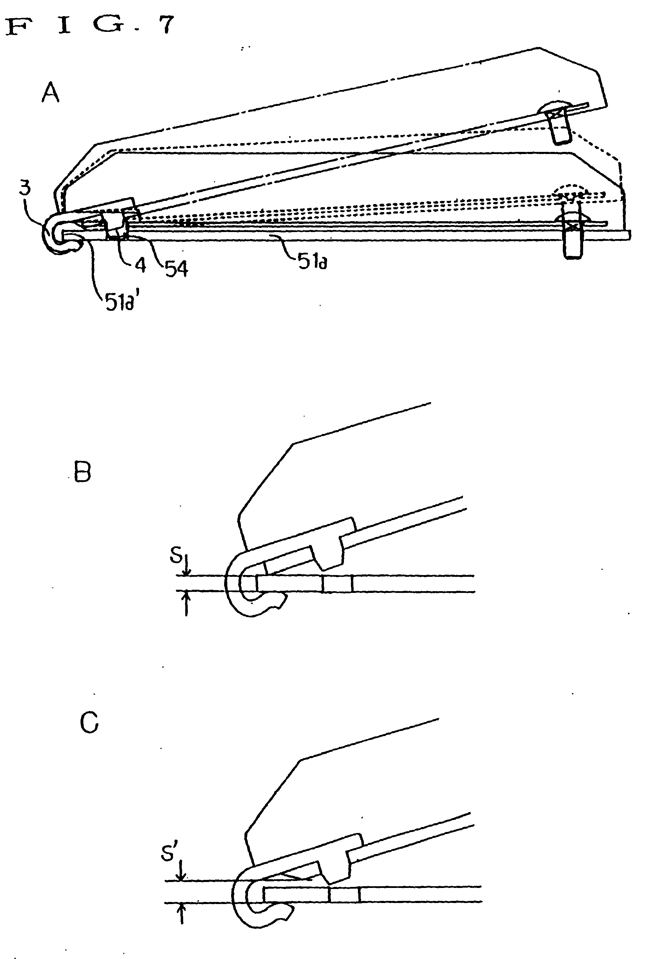

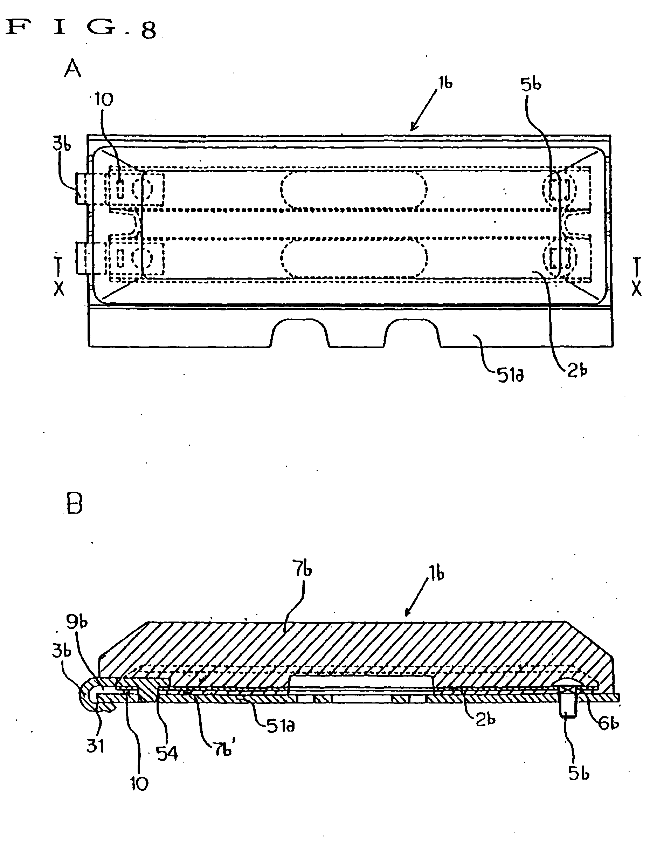

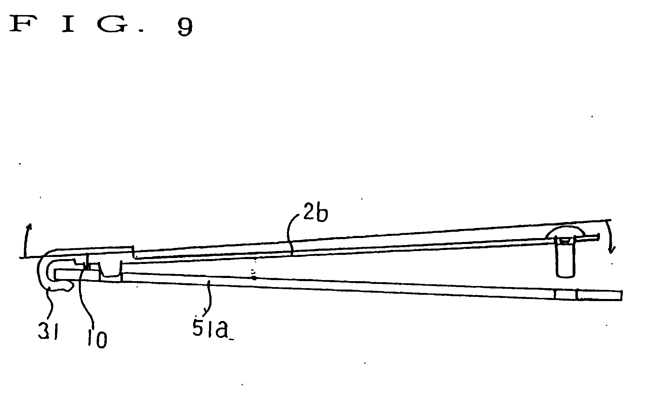

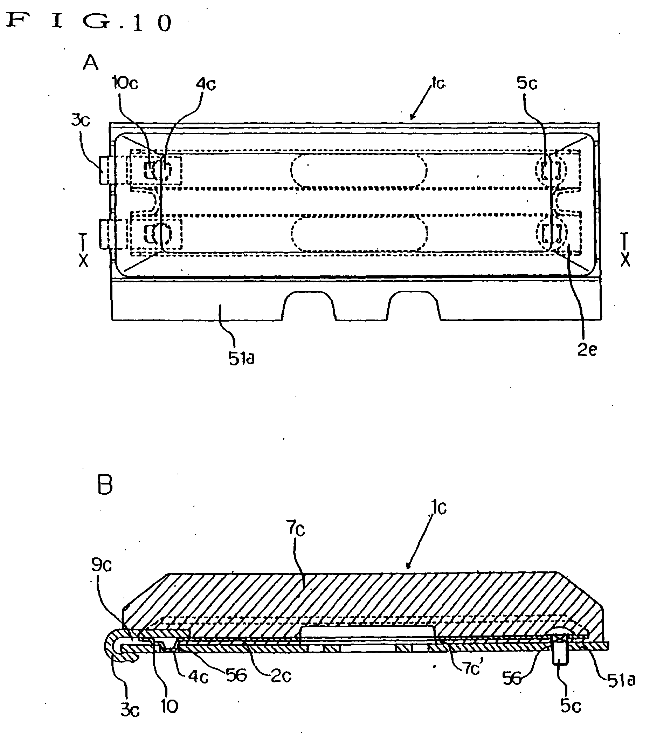

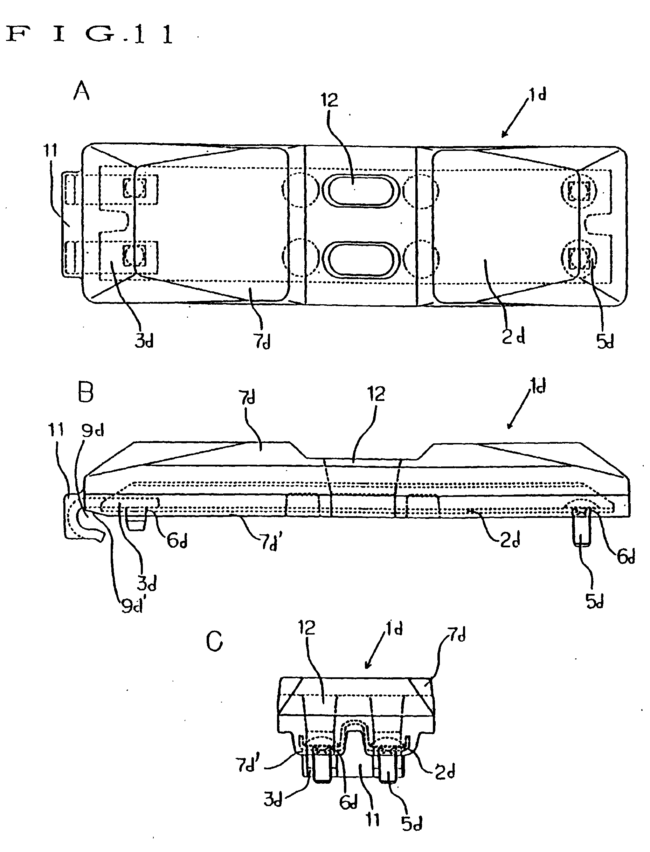

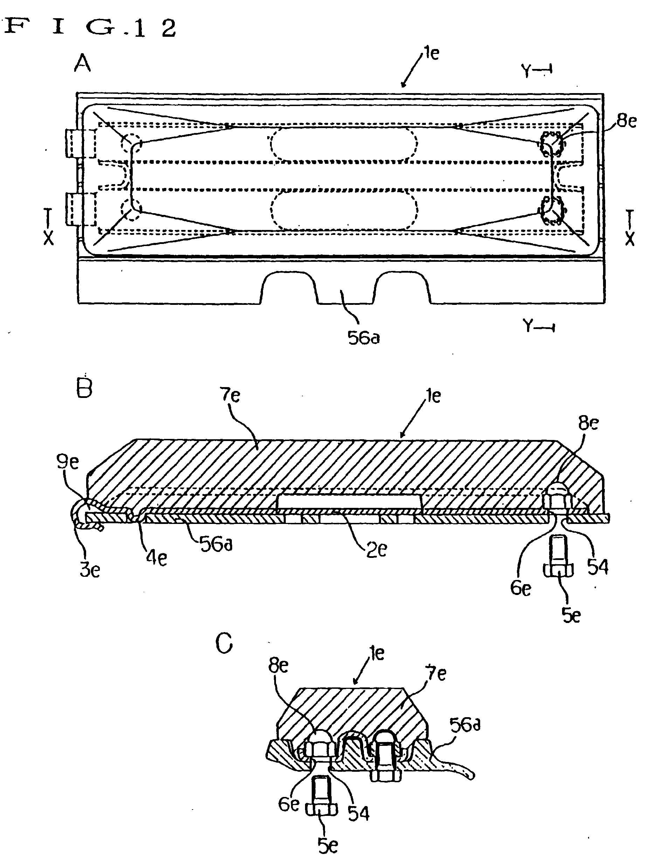

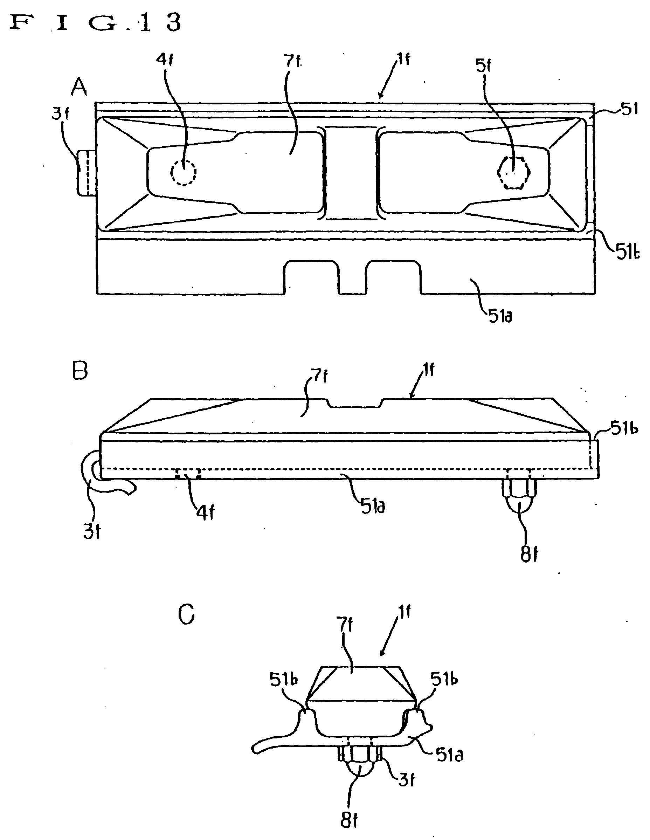

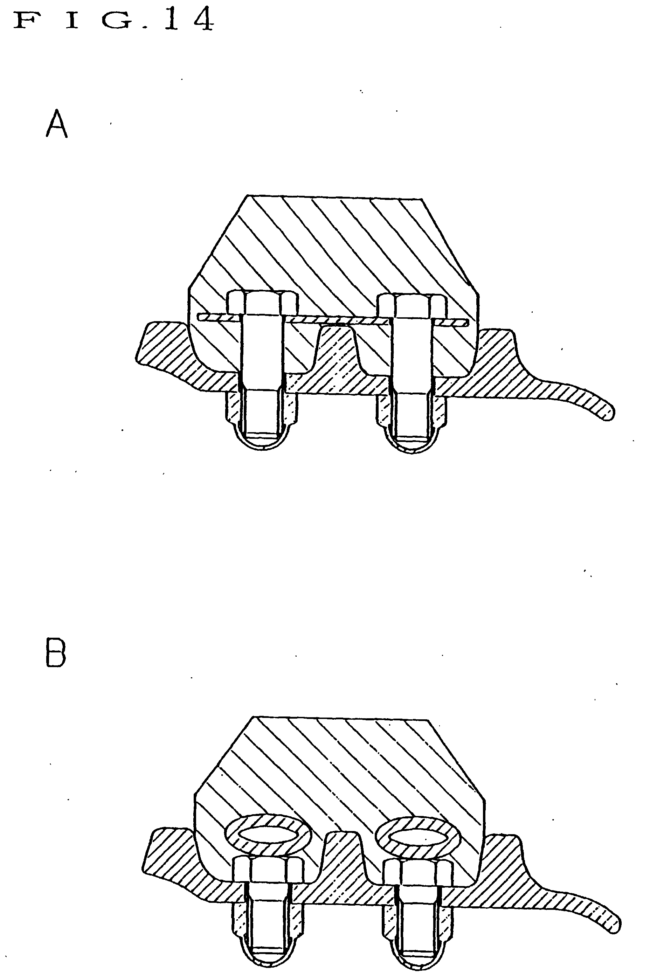

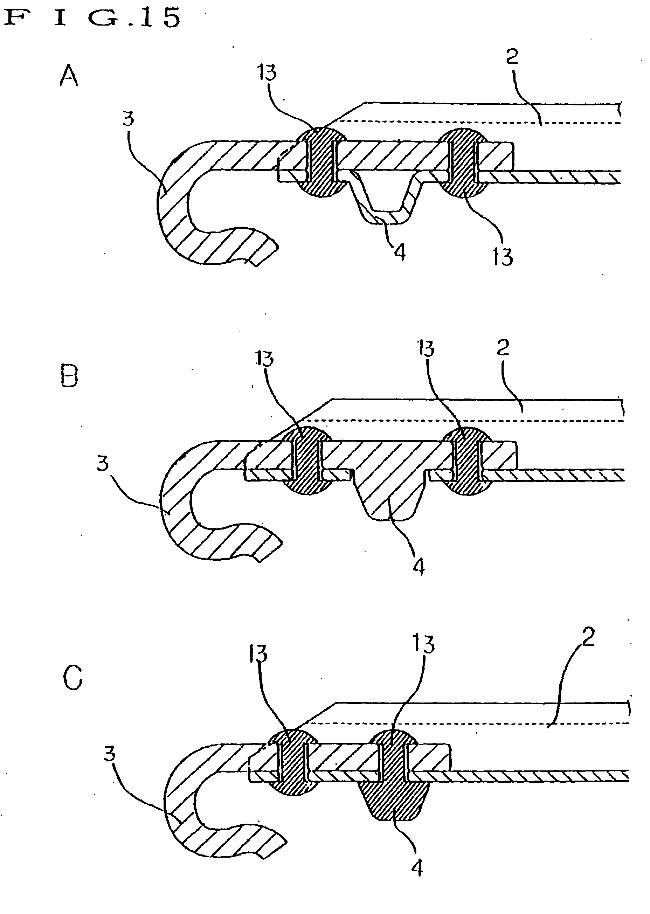

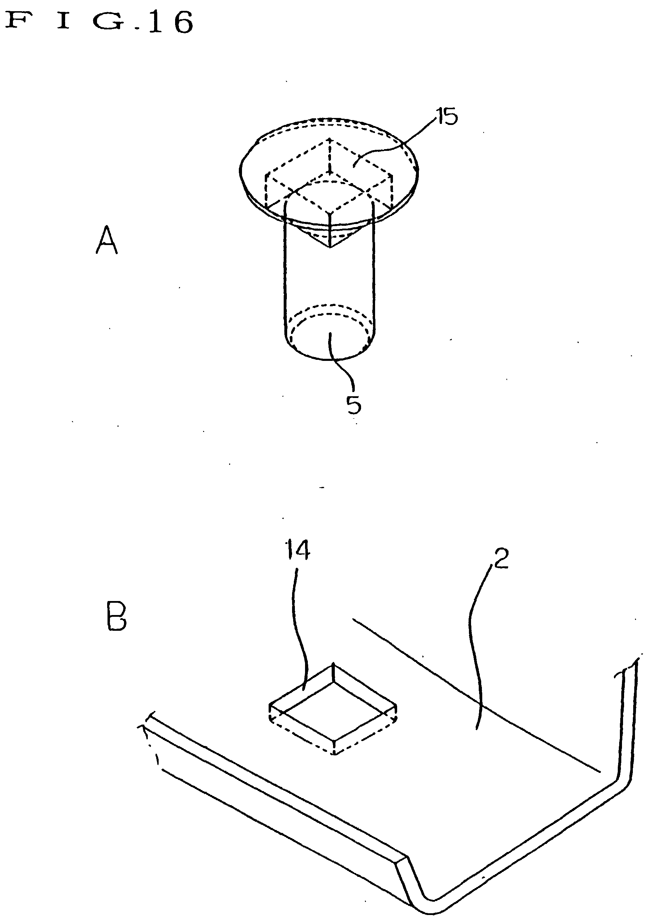

Fig. 1 is a plan view of a detachable pad of the first embodiment of the present invention. Fig. 2 is a sectional view along the line X-X of Fig. 1. Fig. 3 is a sectional view along the line Y-Y of Fig. 1. Fig. 4 is a plan view of a detachable pad of the second embodiment of the present invention. Fig. 5 is a sectional view along the line X-X of Fig. 4. Fig. 6 is a sectional view along the line Y-Y of Fig. 4. Fig. 7 is an explanatory view showing how to attach the detachable pad of the present invention to a shoe plate. Fig. 8A is a plan view of the third embodiment of the present invention. Fig. 8B is a sectional view along the line X-X of Fig. 8A. Fig. 9 is an explanatory view showing a supporting point. Fig. 10A is a plan view of a detachable pad of the fourth embodiment of the present invention. Fig. 10B is a sectional view along the line X-X of Fig. 10A. Fig. 11A is a plan view of a detachable pad of the fifth embodiment of the present invention. Fig. 11B is a side view in the longitudinal direction of the detachable pad of the fifth embodiment. Fig. 11C is a side view in the widthwise direction of the detachable pad of the fifth embodiment. Fig. 12A is a plan view of a detachable pad of the sixth embodiment of the present invention. Fig. 12B is a sectional view along the line X-X of Fig. 12A. Fig. 12C is a sectional view along the line Y-Y of Fig. 12A. Fig. 13A is a plan view of a detachable pad of the seventh embodiment of the present invention. Fig. 13B is a side view in the longitudinal direction of the detachable pad of the seventh embodiment. Fig. 13C is a side view in the widthwise direction of the detachable pad of the seventh embodiment. Fig. 14A is a sectional view of a detachable pad of the eighth embodiment. Fig. 14B is a sectional view of a detachable pad of the ninth embodiment. Fig. 15 is a sectional view showing a main part of a detachable pad of the tenth embodiment. Fig. 16 is an explanatory view showing a main part of a detachable pad of the eleventh embodiment of the present invention. Fig. 17 shows a conventional iron crawler. Fig. 18 is a perspective view of a modified example of a conventional iron crawler. Fig. 19 shows a conventional detachable pad. Fig. 20 shows a modified example of a conventional detachable pad. Fig. 21 is an explanatory view showing how loading is given to the conventional detachable pads.

### Detailed Description of the Preferred Embodiment

Figs. 1∼3 show the first embodiment of a detachable pad of the present invention: Fig. 1 is a plan view, Fig. 2 is a sectional view along the line X-X of Fig. 1, and Fig. 3 is a sectional view along the line Y-Y of Fig. 1. In these figures, 2 is a core bar, and a hook 3 is welded to one edge of the core bar 2. The core bar 2 is provided with insertion holes 6 for fixing pins 4 and bolts 5 at sites corresponding to mounting holes 54 provided on both ends of a shoe plate 51a. The pins 4 are inserted into the insertion holes 6 on the hook 3 side, whereas the bolts 5 are inserted into them on the other side, from the ground side of the pad so as to protrude from the core bar 2, and welted there. An elastic body 7 is vulcanized and bonded to the ground side of the core bar 2 to form a pad 1. Here, 8 is a nut.

Figs. 4∼6 show the second embodiment of the detachable pad of the present invention: Fig. 4 is a plan view, Fig. 5 is a sectional view along the line X-X of Fig. 4, and Fig. 6 is a sectional view along the line Y-Y of Fig. 4. In the second embodiment of the present invention, as shown in Fig. 5, a core bar 2a is integrally formed with a pin 4a. A hook 3a and bolts 5a are welded to the core bar 2a as in the first embodiment. A rubber body 7a is vulcanized and bonded to the ground side of the core bar 2a. Besides, rubber is vulcanized and bonded between the core bar 2a and the shoe plate 51a to form a rubber layer 7a' therebetween. Therefore, the core bar 2 is embedded in rubber. The thickness of the rubber layer 7a' is preferably less than the height of a grouser of the shoe plate, usually within 0.5 mm ∼ 5 mm, because the durability of the elastic body of the pad decreases if the thickness is more than that.

In this case, it is preferable not to form the rubber layer 7a around the end of the core bar 2 on the hook 3a side, and instead to form an opening 9 there. As shown in Fig. 7A, in order to fix the pad of the present invention to the shoe plate 51a, the hook 3 is first engaged with an end 51a' of the shoe plate 51a, and next the pins 4 are inserted into the mounting holes 54 of the shoe plate. As shown in Fig. 7B, when the hook of the pad having no opening 9 is engaged with the end of the shoe plate, there is only a little interval (S) between the hook and the pad. However, as shown in Fig. 7C, the pad with the opening 9 has an interval (S') between the hook and the pad, thereby causing a wider space for fixing it to the shoe plate than in the pad without opening 9. Accordingly, the pad can be fixed more easily.

The third embodiment of the present invention is explained according to Figs. 8A and 8B. Fig. 8A is a plan view, and Fig. 8B is a sectional view along the line X-X of Fig. 8A. In a pad 1b of this embodiment, hook hardwares 3b which are integrally formed with hooks and pins are inserted from the ground side and welded to insertion boles 6b on one side of a core bar 2b. The insertion holes 6b are provided at the sites corresponding to the mounting holes 54 of the shoe plate. Besides, bolts 5b are fixed to the insertion holes 6b on the other side of the core bar 2b in the same manner. A rubber body 7b is vulcanized and bonded to the ground side of the core bar 2b, and a rubber layer 7b' is formed to the shoe plate side thereof as well, thereby causing the core bar 2b to be embedded in rubber. The rubber layer 7b' is not provided to the end of the hook side of the core bar to form an opening 9b, and a supporting point 10 is formed there.

The supporting point 10 surely enables a tip 31 of the hook of the pad to engage with the shoe plate irrespective of size dispersion of the shoe plate due to manufacturing errors. Precisely, as shown in Fig. 9, when inserting the bolts 5b into the insertion holes 54 to fix the pad, the tip 31 of the hook is lifted up to the ground side of the shoe plate according to the theory of a lever, fulcrumming the supporting point 10. Therefore, the hooks 3 are surely engaged with the shoe plate.

The fourth embodiment of the present invention is explained according to Figs. 10A and 10B. The fourth embodiment shows a different example of the above third embodiment. Fig. 10A is a plan view, and Fig. 10B is a sectional view along the line X-X of Fig. 10A. In this embodiment, a pad body 1c has the following constructions. Hooks 3c and bolts 5c are welded to a core bar 2c which is integrally formed with pins 4c and supporting points 10c. A rubber body 7c is vulcanized and bonded to the ground side of the core bar 2c, and a rubber layer 7c' is formed to the shoe plate side thereof as well, thereby causing the core bar 2c to be embedded in rubber. The rubber layer 7c' is not provided to the end of the hook side of the core bar to form an opening 9c.

The fifth embodiment of the present invention is explained according to Figs. 11A, 11B and 11C. Fig. 11A is a plan view, Fig. 11B is a side view in the longitudinal direction, and Fig. 11C is a side view in the widthwise direction. In a pad 1d of the fifth embodiment, bolts 5d and hook hardwares 3d which are formed integrally with hooks and pins are inserted and fixed to insertion holes 6d of the core bar 2d from the ground side. A rubber body 7d is vulcanized and bonded to the ground side of the core bar 2d, and a rubber layer 7d' is vulcanized and bonded to the shoe plate side thereof as well, thereby causing the core bar 2d to be embedded in rubber. The end of the rubber layer 7d' on the hook side is formed into an inclined face 9d' towards the ground side, thereby forming an opening 9d there. Besides, rubber is vulcanized and bonded to ground and side faces of the hook hardware 3d to form a hook-coating rubber layer 11 there. Therefore, the hooks are coated with rubber.

Moreover, in this embodiment, the pad 1d is provided with mud-discharging holes 12 at sites corresponding to mud-discharging holes 55 (not illustrated) which are provided around the middle of the shoe plate; so that the mud-discharging holes 12 communicate with the mud-discharging holes 55. Accordingly, the mud-discharging holes 55 of the shoe plate are never closed, thereby causing no deficiency that mud is stuffed between the iron crawler and an idler wheel as well as a drive wheel of the body. In the pad provided with the mud-discharging holes 12, as shown in Fig. 11B, it is preferable to lower a center part of the rubber body 7 around the mud-discharging hole 12 because of lower durability of the rubber body 7 on the ground side around the mud-discharging holes 12.

The sixth embodiment of the present invention is explained according to Figs. 12A, 12B and 12C. Fig. 12A is a plan view, Fig. 12B is a sectional view along the line X-X of Fig. 12A, and Fig. 12C is a sectional view along the line Y-Y of Fig. 12A. In a pad 1e of the sixth embodiment, a core bar 2e is integrally formed with pins 4e and hooks 3e, and provided with insertion holes 6e at sites corresponding to the mounting holes 54 of the shoe plate. Nuts 12 are welded to upper parts of the insertion holes 6e. Besides, a rubber body 7e is vulcanized and bonded to the ground side of the core bar 2e. Moreover, the ground side of the hook 3e of the core bar 2e is formed in a R-shape to form an opening 9e there.

The seventh embodiment of the present invention is explained according to Figs. 13A, 13B and 13C. Fig. 13A is a plan view, Fig. 13B is a longitudinal side view, and Fig. 13C is a widthwise side view. This embodiment relates to a pad 1f to be fixed to a shoe plate shown in Fig. 18, which has no grouser 51b in the middle so as to form a concave-like section. The pad 1f is formed in the same manners as the above embodiments. Here in these figures, 3f is a hook, 4f is a pin, 5f is a bolt, 7f is an elastic body, and 8f is a nut.

Furthermore, the present invention is modified as follows.
(1) In the above embodiments, the core bar is formed according to a shape of the shoe plate, whereas it can be in a flat section as shown in Fig. 14A, or in a pipe-like section as shown in Fig. 14B.
(2) In the above embodiments, mounting members such as the hook 3, the pin 4 and the bolt 5 are welded to the core bar, whereas these can be fixed by means of rivets 13 as shown in Figs. 15A, 15B and 15C. Besides, the pin can be integrally formed into a rivet, as shown in Fig. 15C.
(3) In the above embodiments, the mounting member such as the bolt 5 and the insertion hole for the pin 4 are formed in a round shape, whereas the insertion hole 14 can be formed in a square as shown in Fig. 16B. In this case, portions of the mounting member such as the bolt 5 and the insertion hole for the pin 4, which connect with the insertion hole 14, must be formed in about the same shape as the insertion hole 14 (vide a lower part of a bolt neck in Fig. 16A). When the nut 12 is fastened to fix the pad, this construction effectively prevents the bolt from turning in a fastening direction.

As described above, in the present invention, the pad body comprises the core bar and the elastic body. One end of the core bar is provided with the hooks engaged with the end of the shoe plate, whereas the other end is provided with the fixing members at sites corresponding to the mounting holes of the shoe plate. Besides, the pins are provided to the pad at sites corresponding to the mounting holes of the shoe plate on the hook side, so that the pins engage with the mounting holes. In this construction, the pins effectively prevent loading from concentrating to the fixing members of the pad, thereby causing the durability of the mounting members. Accordingly, the durability of the detachable pad body can increase remarkably.

## Claims

1. A detachable rubber pad to be fixed to the ground side of a shoe plate which has mounting holes around longitudinal ends thereof:
wherein a pad body comprises a core bar and an elastic body fixed to the ground side of said core bar;
wherein a hook is provided to one end of said core bar to engage with an end of the shoe plate;
wherein on the other end of said core bar fixing members are embedded inside the elastic body at sites corresponding to the mounting holes of the shoe plate; and
wherein pins are provided to sites corresponding to the mounting holes of the shoe plate on the hook side.

2. A detachable rubber pad as set forth in Claim 1:
wherein fixing members to be embedded in the elastic body comprise bolts.

3. A detachable rubber pad as set forth in Claim 1:
wherein fixing members to be embedded in the elastic body comprise nuts.

4. A detachable rubber pad as set forth in any of Claims 1 ∼ 3:
wherein an opening is provided to the hook end of the core bar on the non-ground side.

5. A detachable rubber pad as set forth in Claim 4:
wherein supporting points are provided beside the pins in said opening.
